# EUROPEAN PATENT APPLICATION

(11) **EP 4 744 794 A1**
(43) Date of publication of application: **20.05.2026**
(21) Application number: 24213391.6
(22) Date of filing: 15.11.2024
(51) Int. Cl.: B08B 17/02, B08B 9/027, C02F 1/48

(54) **ELECTRICAL ANTI-FOULING DEVICE**

(71) Applicant: Hydro-Service Schweiz GmbH, 5610 Wohlen (CH)
(72) Inventor: Ekberg, Peter, Domsten (SE); Lindwall, Per, Cotignac (FR)
(74) Representative: AWA Sweden AB

(57) **Abstract**

The present disclosure relates to an electrical anti-fouling (EAF) device (10) for reducing fouling of an interior surface of a pipe (20), the anti-fouling device (10) comprising: a first body (100) housing an electromagnetic coil (120) comprising an electrically conductive winding (122) wound around a core (124) of a ferrimagnetic material; a second body (200) comprising a receptacle (210) comprising an opening (212) for receiving an elongated ferrimagnetic element (220) and an accommodation space (214) for retaining the elongated ferrimagnetic element (220), wherein the accommodation space (214) is provided with a first spring (232a) and a second spring (232b); wherein the receptacle (210) is configured such that when the EAF device (10) is brought into an assembled state, the elongated ferrimagnetic element (220) and the core (124) of the electromagnetic coil (120) are pressed against each other whereby the elongated ferrimagnetic element (220) is pressed against the first spring (232a) and the second spring (232b), thereby bringing the first spring (232a) and the second spring (232b) into a biased state, and wherein, in the assembled state, the elongated ferrimagnetic element (220) is arranged against the first end portion (126a) and the second end portion (126b) of the core (124) of the electromagnetic coil (120) such that the core (124) and the elongated ferrimagnetic element (220) forms a magnetic circuit.

## Description

### FIELD OF INVENTION

The present inventive concept relates, in general, to an electrical anti-fouling (EAF) device for reducing fouling of an interior surface of a pipe.

### BACKGROUND OF THE INVENTION

Fouling, the accumulation of unwanted material on solid surfaces, is a long standing challenge in pipes that transport liquids and biproducts, such as water pipes and sewage pipes. Fouling can consist of both organic and inorganic substances. One form of fouling originates from hard water comprising high concentrations of minerals, wherein the minerals cause fouling on the interior surface of the pipes.

Traditionally water softeners have been used to reduce fouling due to minerals in the water transported in the pipe. However the use of water softeners may have negative ecological impact, it is costly, often regulated by laws, and involves a lot of work as it requires a section of pipe to be removed and replaced by a device.

The non-chemical electrical anti-fouling (EAF) technology has become increasingly available for various applications. EAF devices impart electromagnetic fields into the water, changing the way minerals in the water precipitate.

However, there still remain various aspects of EAF devices that are in need of improvement. For example, there is still a need for improving the effectiveness of EAF devices in reducing fouling and the ease of installation and use of EAF devices.

### SUMMARY OF THE INVENTION

It is an objective of the present inventive concept to provide an electrical anti-fouling (EAF) device with improved effectiveness in reducing fouling of an interior surface of a pipe.

It is a further objective of the present inventive concept to enable an EAF device that facilitates easier installation of the EAF device.

These and other objectives of the inventive concept are at least partly met by the inventive concept as defined in the independent claim. Preferred embodiments are set out in the dependent claims.

According to a first aspect there is provided an electrical anti-fouling (EAF) device for reducing fouling of an interior surface of a pipe, the anti-fouling device comprising:
a first body housing an electromagnetic coil, the electromagnetic coil comprising an electrically conductive winding wound around a core of a ferrimagnetic material, the electromagnetic coil being configured to be electrically coupled to a current source for providing the electromagnetic coil with an alternating current (AC), wherein the core of the electromagnetic coil comprises a first end portion and a second end portion;
a second body comprising a receptacle, the receptacle comprising an opening for receiving an elongated ferrimagnetic element and an accommodation space for retaining the elongated ferrimagnetic element, wherein the accommodation space is provided with at least one spring, the at least one spring having an extension in a direction towards the opening;
wherein the second body is configured such that, in an assembled state of the EAF device, the second body is connected to the first body such that the opening of the receptacle faces the first body; and
wherein the receptacle is configured such that when the EAF device is brought into the assembled state, an elongated ferrimagnetic element which is retained in the receptacle and the core of the electromagnetic coil are pressed against each other whereby the elongated ferrimagnetic element is pressed against the at least one spring, thereby bringing the at least one spring into a biased state, and wherein, in the assembled state, the elongated ferrimagnetic element is arranged against the first end portion and the second end portion of the electromagnetic coil such that the core and the elongated ferrimagnetic element forms a magnetic circuit.

It is a realization that a snug fit is achieved by the at least one spring being in a biased state, thereby keeping the elongated ferrimagnetic element pressed against the at least one spring, at both an interface between the first end portion of the core and the elongated ferrimagnetic element and at an interface between the second end portion of the core and the elongated ferrimagnetic element. The snug fit facilitates reduced power losses in the EAF device due to reduced magnetic field leaking at the interfaces in the magnetic circuit. Hereby, improved power transfer from the electromagnetic coil to the pipe is achieved. In other words, a more power efficient EAF device for more effectively reducing fouling in the pipe is provided. Hereby, an EAF device which is easier to assemble and at the same time facilitates reduced power loss is provided.

It is a further realisation that the improved power efficiency, i.e. a reduced energy loss, of the EAF device according to the disclosed invention facilitates generation of an electric field in the pipe that oscillates with a higher frequency. In other words, a higher frequency AC can be applied to the electromagnetic coil while ensuring that the electric field generated in the pipe has sufficient power to reduce fouling in the pipe. A higher electric field in the pipe may improve the effect of the EAF device in reducing fouling.

The AC current in the winding wound around the core induces a time-varying magnetic field inside the core of the electromagnetic coil extending through the magnetic circuit. The time-varying magnetic field of the magnetic circuit in turn induces a time-varying electric field in the pipe.

The time-varying electric field in the pipe reduces fouling of the interior surface of the pipe as well as the liquid inside the pipe. The time-varying electric field provides energy in the form of molecular agitation to charged mineral ions of various compounds, for example calcium ions and bicarbonate ions. The energy provided affects the crystallization of the various compounds such that the various compounds crystallize in shapes that are more easily removed by turbulence and the flow of the liquid in the pipe. For example, the time-varying electric field causes calcium carbonate (CaCOs) to crystalize in calcite form instead of aragonite form, calcite form being a form that easily adheres to the interior surface of the pipe and is hard to remove. Thereby the fouling, sometimes referred to as calcification, of the pipe is reduced.

The pipe in which to reduce fouling may be any type of pipe through which a liquid is transported. The liquid may be for example water.

The electrically conductive winding being wound around the core implies that the electrically conductive winding forms at least one partial loop around the core such that the electrically conductive winding at least partially encircles the core. In a preferred embodiment, the electrically conductive winding forms a plurality of loops around the core.

The ferrimagnetic material of the core and a ferrimagnetic material of the elongated ferrimagnetic element may be non-electrically conductive. Non-electrically conductive is to be understood as having none or a low electrical conductivity. Low electrical conductivity may imply an electrical conductivity for example below 10 mS/m, preferably below 2 mS/m.

The electromagnetic coil being coupled to the current source implies that the electrically conductive winding is electrically connected to the current source such that a current may be applied through the electrically conductive winding by the current source.

The first body and the electromagnetic coil may both be substantially U-shaped. Substantially U-shaped implies that the core is bent such that a surface of the first end portion and a surface of the second end portion at least partially faces the same direction.

The receptacle may be removably or fixedly connected to the second body. The receptacle may be manufactured as a separate component of the second body. Alternatively, the receptacle may be an integrated portion of the second body. In the later case, the second body comprising the receptacle and the at least one spring fabricated as one component.

The at least one spring may be any type of mechanical spring having an elastic element, such that when the at least one spring is deformed by a biasing force from a resting state to a biased state, the at least one spring exerts an opposing force to the biasing force.

In some embodiments, the receptacle may comprise a plurality of partial receptacles. The partial receptacles being configured such that the receptacle is formed by abutting the plurality of partial receptacles.

In some embodiments, the receptacle may comprise at least one retention element. The retention element being configured to retain the elongated ferrimagnetic element in the accommodation space. The retention element may be arranged to partially protrude over the opening of the receptacle.

The first body and the second body may comprise connection means configured to removably connect the first body and the second body. The connection means may comprise for example snap fit connections.

The at least one spring may comprise a first spring and a second spring, wherein the first spring and the second spring are configured to abut a respective one of a first portion and a second portion of the elongated ferrimagnetic element.

That is, the first spring may abut the first portion of the elongated ferrimagnetic element and the second spring may abut the second portion of the elongated element. Since the first spring and the second spring are configured to abut different respective portions of the elongated ferrimagnetic element, they are consequently arranged at different locations in the accommodation space.

The first spring may be arranged to, in the assembled state, press the elongated ferrimagnetic element against the first end portion of the core of the electromagnetic coil. The second spring may be arranged to, in the assembled state press the elongated ferrimagnetic element against the second end portion of the core.

In the assembled state, the first spring may be in a first spring biased state and the second spring may be in a second spring biased state. The first spring biased state and the second spring biased state may be different.

It is a realization that, because the first spring and the second spring are arranged at different locations in the accommodation space and may be in different biased states, the springs may apply different pressures at different portions of the elongated ferrimagnetic element. In other words, the first spring and the second spring may non-uniformly press the elongated ferrimagnetic element against the first end portion and the second end portion of the core of the electromagnetic coil. Thus, even in the case that the interfaces between the core and the elongated ferrimagnetic element comprises any uneven surfaces, for example if the elongated ferrimagnetic element comprises an uneven surface, the first spring and the second spring may press the elongated ferrimagnetic element against the core such that a snug fit is ensured at all interfaces between the core and the elongated ferrimagnetic element.

The elongated ferrimagnetic element may be a ferrite.

The ferrite may facilitate reduced power loss of the EAF device. In particular, the ferrite may facilitate reduced power loss of the EAF device when a high frequncy AC is provided. Power losses at high frequency may for example be due to heat generation, hysteresis, and Eddy-currents.

The at least one spring may be provided in the form of a springboard shaped elongated body having a respective first spring end portion fixedly connected to the receptacle and extending from the first spring end portion to a second spring end portion, the second spring end portion being moveable with respect to the first spring end portion.

The springboard shaped elongated body may comprise or be formed by a resilient material. The resilient material may for example be a polymer.

Hereby, the at least one spring may be more easily manufactured. For example, the at least one spring may be formed in the same process as the rest of the receptacle, e.g. through injection moulding.

The springboard shaped elongated body may have an arced abutment surface for engaging the elongated ferrimagnetic element.

The springboard shaped elongated body having an arced abutment surface enables the spring to maintain a similar contact area with the elongated ferrimagnetic element in different biased states of at least one spring. Thus good contact between the at least one spring and the elongated ferrimagnetic element is ensured in different biased states of the at least one spring.

In the case that the at least one spring comprises the first spring and the second spring, and the first spring biased state and the second spring biased state are different, the curving of the respective spring may ensure that a contact surface between the first spring and the elongated ferrimagnetic element is roughly the same as a contact surface between the second spring and the elongated ferrimagnetic element.

The springboard shaped elongated body having an arced abutment surface may further improve the strength and durability of the at least one spring.

The accommodation space may be defined by a bottom portion and at least one wall portion, wherein the at least one spring is arranged at the bottom portion or at the at least one wall portion.

The bottom portion and the at least one wall portion of the accommodation space may be portions of the second body. Alternatively, the bottom portion and the at least one wall portion of the accommodation space may be portions of the receptacle wherein the receptacle may be removably or fixedly connected to the second body. Thus, a material of the bottom portion and the at least one wall portion may be different than a material of other portions of the second body.

The first spring end portion of the at least one spring may be fixedly connected to the bottom portion or one of the at least one wall portion of the accommodation space.

Since the bottom portion and the at least one wall portion may be the only portions of the second body that are in contact with the elongated ferrimagnetic element, such embodiments enable the material of portions of the second body that are in contact with the elongated ferrimagnetic element to differ from the material of other portions of the second body. Some materials may be more suitable for portions of the second body that are in contact with the elongated ferrimagnetic material, and other materials may be more suitable for portions of the second body that are not in contact with the elongated ferrimagnetic material.

A material of the at least one spring may be the same material as the material of the bottom portion or the at least one wall portion. The material of the at least one spring, the bottom portion, and the at least one wall portion, may be chosen as a material that is suitable for a spring. The receptacle comprising the at least one spring, the bottom portion, and the at least one wall portion, may be fabricated as one component separate from other portions of the second body.

In the case where the at least one spring comprises the first spring and the second spring, in an assembled state of the EAF device, the first spring and the first end portion of the electromagnetic coil may be arranged along a first alignment axis and the second spring and the second end portion of the electromagnetic coil may be arranged along a second alignment axis.

It is a realization that such arrangement of the first spring and the second spring enables a more snug fit both at the interface between the first end portion of the core and the elongated ferrimagnetic element and at the interface between the second end portion of the core and the elongated ferrimagnetic element.

The second body may comprise a metal housing.

In some embodiments, the metal housing and the receptacle may be separate components that are separately formed and removably or fixedly connected. A material of the receptacle may differ from a material of the metal housing. The metal housing of the second body may comprise an opening for receiving the elongated ferrimagnetic element, the opening of the metal housing may be arranged to overlap with the opening of the receptacle.

In other embodiments, the metal housing of the second body and the receptacle may be formed as one component and comprise the same material.

However, it is to be understood that in some embodiments the second body may comprise other materials such as polymers.

The metal housing of the second body may protect the EAF device against various forms of abrasion and improve its rigidness and thereby its lifetime.

In an assembled state of the EAF device, the elongated ferrimagnetic element may be electrically insulated from the outer metal housing of the second body.

There are many ways by which the elongated ferrimagnetic element may be electrically insulated from the outer metal housing of the second body. For example, the material of the receptacle may be an electrically insulating material; portions of the receptacle that are in contact with the elongated ferrimagnetic element may be coated by the electrically insulated material; or the elongated ferrimagnetic element may at least partially comprise the electrically insulating material. The electrically insulating material may for example be a polymer.

Electrically insulating the elongated ferrimagnetic element from the metal housing of the second body ensures that no or little current may flow between the elongated ferrimagnetic element and the metal housing of the second body. Current flowing through the magnetic circuit may be a source of power loss in the EAF device and it is therefore desirable to minimize said current flow.

The first body may comprise a metal housing.

The metal housing of the first body may protect the EAF device against various forms of abrasion and improve its rigidness and thereby its lifetime.

The electromagnetic coil may be electrically insulated from the metal housing of the first body. For example, portions of the first body that are in contact with the electromagnetic coil may be coated in an electrically insulated material; the first body may comprise a holder for the electromagnetic coil, wherein a material of the holder may be the electrically insulating material; or the electromagnetic coil may be at least partially coated in the electrically insulating material. The electrically insulating material may for example be a polymer.

Electrically insulating the electromagnetic coil from the metal housing of the first body ensures that no or little current may flow between the electromagnetic coil and the metal housing of the first body. Said current flow may be a source of power loss in the EAF device and it is therefore desirable to minimize said current flow.

The metal housing of the first body may comprise a slit-shaped opening, the slit-shaped opening being arranged in a portion of the inwards facing surface of the first body.

Since the metal housing of the first body may comprise a slit-shaped opening, the housing may consequently not fully encircle the core of the electromagnetic coil if the device is seen in a cross-sectional view, wherein the cross-section follows the same direction as the longitudinal axis of the though-hole.

Similarly, the metal housing of the second body may not fully encircle the core of the electromagnetic core of the electromagnetic coil or the elongated ferrimagnetic element as seen in a cross-sectional view, wherein the cross-section has the same extension as the longitudinal axis of the through-hole.

The slit-shaped opening reduces the risk that the metal housing could form a closed electrical circuit such that a magnetic field of the core may induce an electrical current in the metal housing, which could negatively impact the functionality of the EAF device

The elongated ferrimagnetic element and/or the electromagnetic coil may be at least partially enclosed by a vibration absorbing material.

The vibration reducing material may be any material that at least partially reduces vibrations of the elongated ferrimagnetic element and/or the electromagnetic coil and at least partially reduces audio noise related to said vibrations.

For example, the receptacle and/or the holder of the electromagnetic coil may comprise the vibration absorbing material. The vibration absorbing material may be the same as the electrically insulating material that electrically insulates the elongated ferrimagnetic element from the outer metal housing of the second body and/or the electrically insulating material that electrically insulates the electromagnetic coil from the metal housing of the first body.

The vibration absorbing material may reduce vibrations and audio noise originating from the elongated ferrimagnetic element and/or the electromagnetic coil, for example due to electrostriction effects.

The current source may be configured to provide the electromagnetic coil with high-frequency AC.

The high-frequency AC may for example refer to a frequency above 10 kHz, preferably above 100kHz, more preferably above 160 kHz.

The high-frequency AC may result in a high-frequency electric field generated in the pipe. The high-frequency electric field may improve the efficiency of the EAF device in removing fouling of the interior surface of the pipe.

The current source may be configured to provide the electromagnetic coil with a plurality of AC pulse trains.

Each pulse train may comprise a plurality of oscillations and span over a pulse time. During the pulse time, the amplitude of the AC current may vary, for example the amplitude of the AC current may monotonically decrease. Each pulse train may be separated in time by a separation time. In other words, a first pulse train is provided for the pulse time and once the separation time has passed since the first pulse train was provided, a second pulse train is provided, and so on for further pulse trains, resulting in a series of pulse trains.

It is a realization that providing the AC current as the plurality of pulse trains may improve the efficiency of the EAF device in removing fouling of the interior surface of the pipe.

### BRIEF DESCRIPTION OF THE DRAWINGS

The above, as well as additional objects, features and advantages of the present inventive concept, will be better understood through the following illustrative and non-limiting detailed description, with reference to the appended drawings. In the drawings, like reference numerals will be used for like elements unless stated otherwise.
Fig. 1 is a schematic perspective view of an EAF device.
Fig. 2a is a schematic top view of the EAF device in Fig. 1 in an unassembled state.
Fig. 2b is a schematic top view of the EAF device in Fig. 1 in an assembled state.
Fig. 3a is a schematic cross-sectional top view of the EAF device in an unassembled state.
Fig. 3b is a schematic cross-sectional top view of the EAF device in an assembled state.
Fig. 4a is a schematic perspective view of a second body of the EAF device.
Fig. 4b is a schematic cross-sectional view of a receptacle of the EAF device.
Fig. 4c is a schematic perspective view of the second body of the EAF device.
Fig. 4d is a schematic cross-sectional view of the receptacle of the EAF device.
Fig. 5 is a schematic perspective view of a receptacle of an EAF device.

### DETAILED DESCRIPTION

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

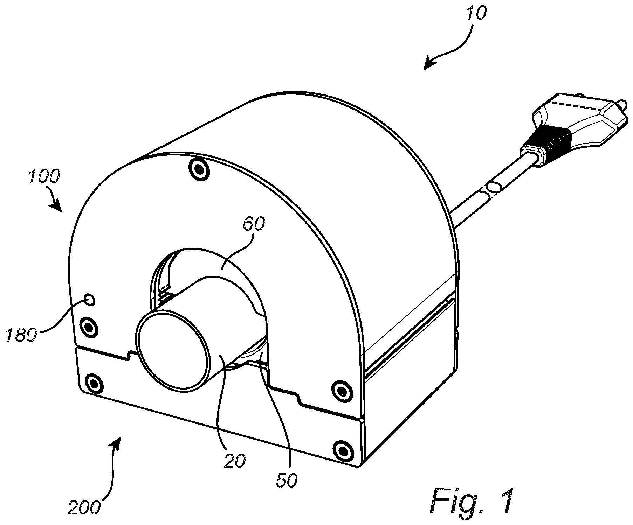

Fig. 1 illustrates an electrical anti-fouling (EAF) device 10 for reducing fouling of an interior surface of a pipe 20. The EAF device 10 comprises a first body 100 and a second body 200 according to an embodiment. The EAF device further comprises a current source (not shown). In Fig. 1, the first body comprises a light indicator 180 which indicates if the EAF device 10 is active or inactive, i.e. if the EAF device is turned on or off.

Fig. 1 illustrates the EAF 10 device in an assembled state where the first body 100 and the second body 200 are connected, and the EAF device encircles and is affixed to the pipe 20. The first body 100 and the second body 200 are arranged such that the EAF device 10 encloses the pipe 20. A pipe clamping element 50 and a further pipe clamping element 60 are arranged to clamp the pipe 20, to thereby fasten the EAF device 10 to the pipe 20.

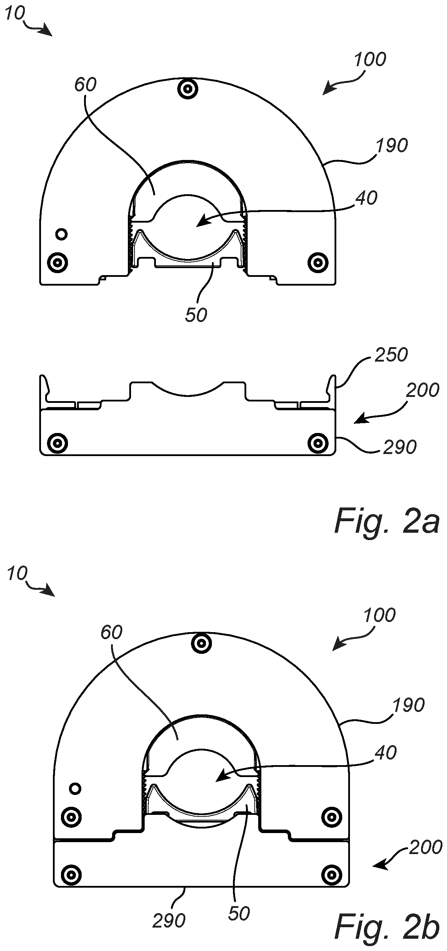

Fig. 2a illustrates the EAF device 10 in an unassembled state. Fig. 2b illustrates the EAF device 10 in an assembled state.

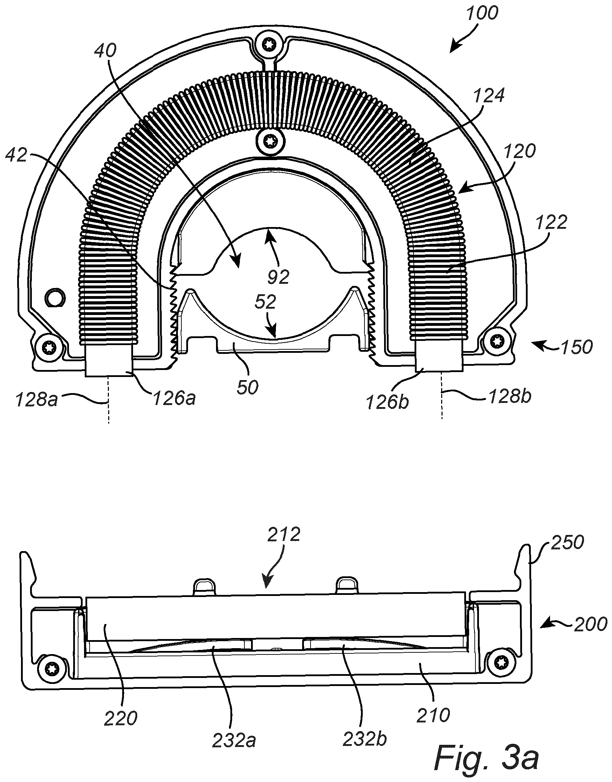

Fig. 3a illustrates a cross-sectional top view of the EAF device 10 in the unassembled state.

The first body 100 houses an electromagnetic coil 120. The electromagnetic coil 120 comprises an electrically conductive winding 122 wound around a core 124 of a ferrimagnetic material. The electromagnetic coil 120 is configured to be electrically coupled to the current source for providing the electromagnetic coil 120 with an alternating current (AC). The core 124 of the electromagnetic coil 120 comprises a first end portion 126a and a second end portion 126b.

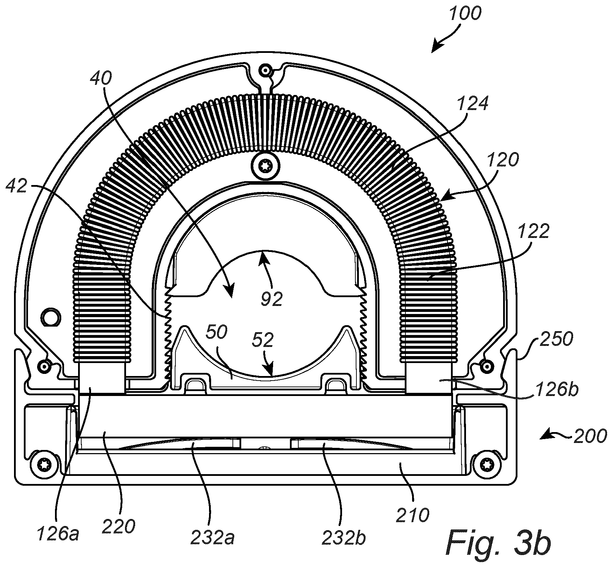

In Fig. 3b, the electrically conductive winding 122 is wound around a major portion of an extension of the core 124. However, the winding 122 may be wound around a portion of the extension of the core 124, the portion of the extension being smaller than the major portion of the extension. The winding 122 may comprise only one winding portion, or a plurality of winding portions. For example, the winding may comprise a first winding portion arranged close to the first end portion 126a of the core 124 and a second winding portion arranged close to the second end portion 126b of the core 124The second body 200 comprises a receptacle 210. The receptacle 210 comprises an opening 212 for receiving an elongated ferrimagnetic element 220. The receptacle 210 comprises an accommodation space 214 for retaining the elongated ferrimagnetic element 220.

In the embodiment of the EAF device 10 depicted in Figs. 3a and 3b, the accommodation space 214 is provided with a first spring 232a and a second spring 232b. The first spring 232a and the second spring 232b having a respective extension in a direction (y) towards the opening 212. It should however be understood that this is just an example and in other embodiments the accommodation space 214 of the EAF device 10 may be provided with at least one spring 232a, 232b, i.e. either one spring or a plurality of springs. For example, the at least one spring may be a spring comprising a large area of contact between the spring and the elongated ferrimagnetic element. For example, such a spring may be arranged centrally in the accommodation space 214 in order to, when in a biased state, apply pressure to the elongated ferrimagnetic element such that the elongated ferrimagnetic element is pressed against the first end portion and the second end portion of the electromagnetic core.

The first body 100 and the second body 200 comprises respective connection means 150, 250 configured to removably connect the first body and the second body. The connection means 150, 250 may comprise protrusions 250 and corresponding receiving portions 150, forming for example a snap fit mechanism. However, it should be understood that the connection means 150, 250 of the first body 100 and the second body 200 may consist of other fastening mechanisms than a snap fit mechanism. The fastening mechanism may be any fastening mechanism that allows the magnetic circuit to form, for example screws, clips, pins, etc.

Fig. 3b illustrates an embodiment of the EAF device 10 in the assembled state. The second body 200 is configured such that, in the assembled state of the EAF device 10, the second body 200 is connected to the first body 100 such that the opening 212 of the receptacle 210 faces the first body 100.

The receptacle 210 is configured such that when the EAF device 10 is brought into the assembled state, an elongated ferrimagnetic element 220 which is retained in the receptacle 210 and the core 124 of the electromagnetic coil are pressed against each other whereby the elongated ferrimagnetic element 120 is pressed against the first spring 232a and the second spring 232b, thereby bringing the first spring 232a and the second spring 232b into a biased state. In the assembled state, the elongated ferrimagnetic element 220 is arranged against the first end portion 126a and the second end portion 126b of the electromagnetic coil 120 such that the core 124 and the elongated ferrimagnetic element 220 forms a magnetic circuit.

As seen in Fig. 3a and 3b, the first body 100 and the electromagnetic coil 120 may both be substantially U-shaped.

In the assembled state, a through-hole 40 is formed in the EAF device, the through-hole 40 being defined by the first body 100 and the second body 200. The through-hole 40 being configured to receive the pipe 20.

Further, the through-hole 40 is provided with engagement means 42. The engagement means 42 is configured to receive and releasably retain a pipe clamping element 50. A clamping surface 52 of the pipe clamping element 50 is configured to cooperate with a further clamping surface 92 of the EAF device 10 so as to clampingly engage the pipe 20 such that the EAF device 10 is attached thereto.

The EAF device is attached to the pipe when the EAF device is brought into the assembled state by positioning the first body and the second body such that the pipe is received in the through-hole 40 when bringing the EAF deice 10 into the assembled state by connecting the first body 100 to the second body 200. Thus, in the assembled state, the EAF device 10 is arranged around the pipe 20, such that the magnetic circuit formed by the core 124 and the elongated ferrimagnetic element 220 encloses the pipe 20.

The elongated ferrimagnetic element 220 may be a ferrite.

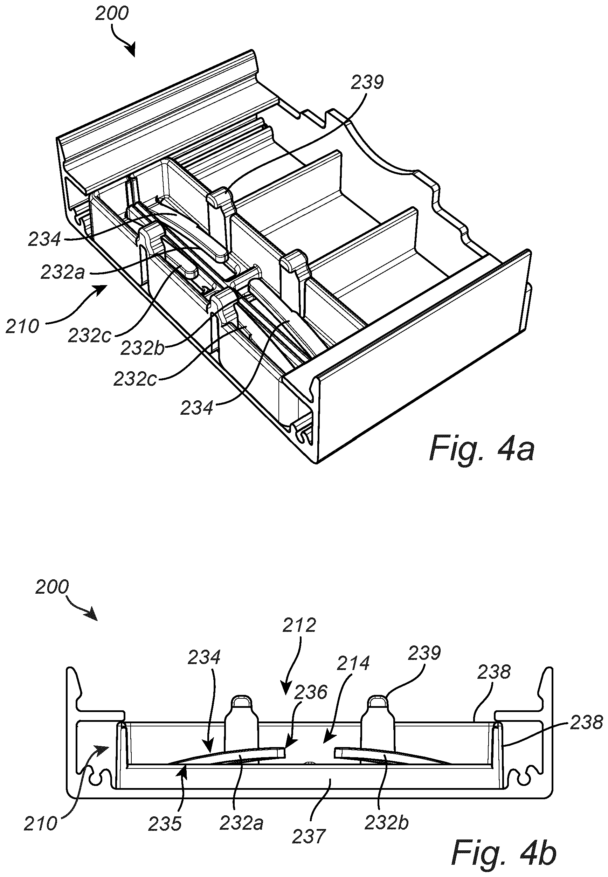

Fig. 4a illustrates the second body 200 comprising the receptacle 210 in a state where an elongated ferrimagnetic element 220 is not retained in the receptacle. In the figure, the receptacle comprises the first spring 232a, the second spring 232b, and two further springs 232c. However, the receptacle may contain no further springs 232c or any number of further springs 232c. The further springs 232c may comprise any of the features related to the first spring 232a and the second spring 232b throughout the application.

In Fig. 4b, each of the first spring 232a and the second spring 232b are provided in the form of a springboard shaped elongated body 234. The springboard shaped elongated body 234 has a respective first spring end portion 235 fixedly connected to the receptacle 210 and extends from the first spring end portion 235 to a second spring end portion 236. The second spring end portion 236 is moveable with respect to the first spring end portion 235. However, the first spring and the second spring may be any type of mechanical spring having an elastic element, such that when the spring is deformed by a biasing force from a resting state to a biased state, the spring exerts an opposing force to the biasing force.

The springboard shaped elongated body 234 has an arced abutment surface for engaging the elongated ferrimagnetic element 220. The abutment surface of the springboard shaped elongated body 234 may be curved in any direction and on any side. However, the abutment surface of the springboard shaped elongated body 234 need not be curved, the springboard shaped elongated body 234 may for example be flat.

In Fig. 4a and 4b, the accommodation space 214 of the receptacle is defined by a bottom portion 237 and four wall portions 238.The first spring 232a and the second spring 232b are arranged at the bottom portion 237. However, the receptacle may comprise any number of at least one wall portions 238. The first spring 232a and the second spring 232b may also or alternatively be arranged on any of the at least one wall portion 238.

The wall portions 238 defines the opening 212 of the receptacle 210. The opening 212 of the receptacle 210 is arranged opposite the bottom portion 237 of the receptacle 210.

In Fig. 4a and 4b the first spring end portion 235 of each of the respective springs 232a, 232b are fixedly connected to the bottom portion 237. However, the first spring end portion 235 of each of the respective springs 232a, 232b may also or alternatively be fixedly connected to the at least one wall portion 238.

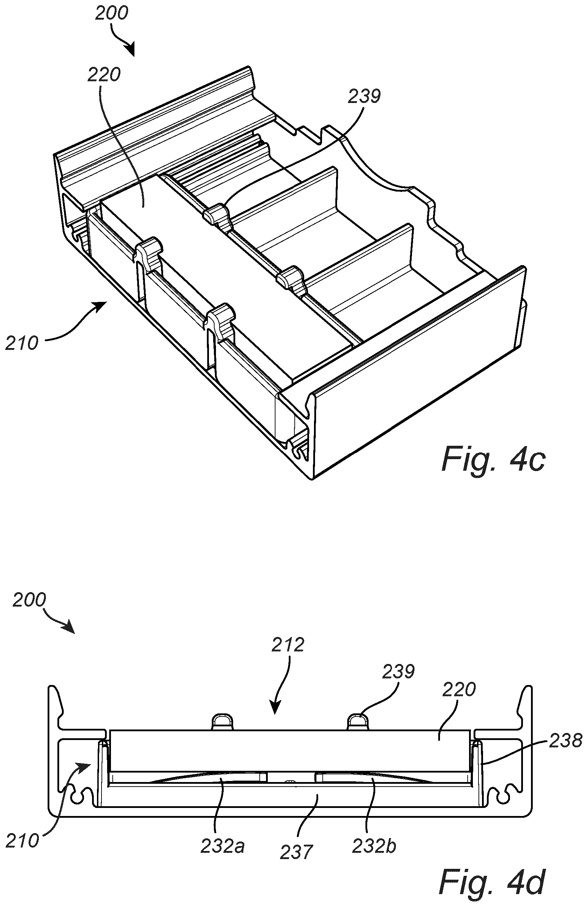

Fig. 4c and 4d illustrates the receptacle 210 in a state where the elongated ferrimagnetic element 220 is retained in the accommodation space 214 of the receptacle 210. The elongated ferrimagnetic element 210 is in contact with first spring 232a and the second spring 232b. The receptacle 210 comprises four retention elements 239 that retain the elongated ferrimagnetic element 220 within the accommodation space 214. However, the receptacle 210 may comprise none or any number of retention elements 239.

When the EAF device 10 is in the unassembled state, the first spring 232a and the second spring 232b may typically be considered to be in an unbiased state. That is, when the elongated ferrimagnetic element 220 is not pressed against the core 124 of the electromagnetic coil, and no other biasing force is acting on the springs 232a, b, the springs 232a,b are in an unbiased state.

The first spring 232a and the second spring 232b are considered to be in a biased state when the EAF device 10 is in the assembled state such that the core 124 of the electromagnetic coil 120 and the elongated ferrimagnetic element 220 are pressed against each other, whereby the elongated ferrimagnetic element 220 is pressed against the first spring 232a and the second spring 232b.

As can be seen for example in Fig. 3a, in the assembled state of the EAF device 10, the first spring 232a and the first end portion 126a of the electromagnetic coil 120 are arranged along a first alignment axis, and the second spring 232b and the second end portion 126b of the electromagnetic coil 120 are arranged along a second alignment axis.

In some embodiments, a housing 290 the second body 200 of the EAF device 10 is a metal housing 290. In some embodiments, a housing 190 of the first body 100 is a metal housing 190. However, a housing 190, 290 of the EAF device 10 is not limited thereto. For example, only one of the second body 200 and the first body 100 may comprise a metal housing, while the other may comprise a housing made of another material, or neither of the second body 200 and the first body 100 may comprise a metal housing.

In the assembled state of the EAF device 10, the elongated ferrimagnetic element 210 is electrically insulated from the outer metal housing 292 of the second body 200 because the receptacle 210 comprises a non-electrically conducting material. However, the elongated ferrimagnetic element 210 may be electrically insulated from the outer metal housing 291 of the second body 200 by other means, or may not be electrically insulated.

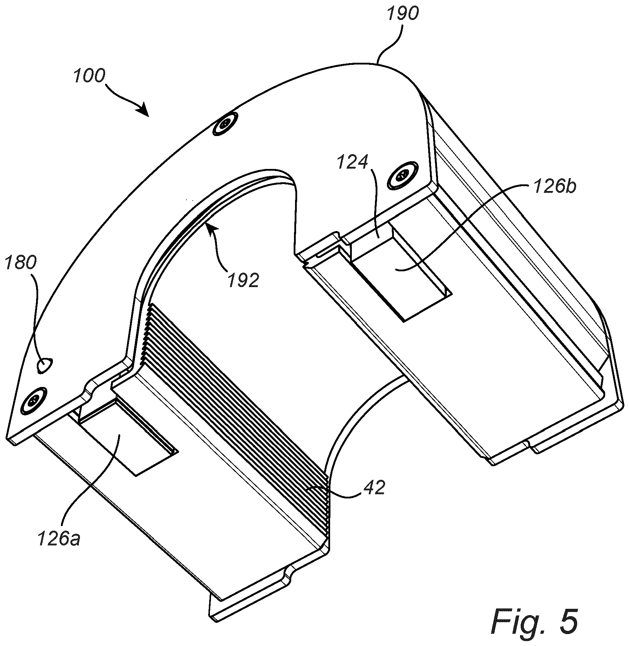

As illustrated in Fig. 5, the metal housing 191 of the first body 100 comprises a slit-shaped opening 192. The slit-shaped opening 192 is arranged in a portion of an inwards facing surface of the metal housing 191.

The AC provided to the electromagnetic coil 120 is a high-frequency AC and is provided in a plurality of pulse trains.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. An electrical anti-fouling (EAF) device (10) for reducing fouling of an interior surface of a pipe (20), the anti-fouling device (10) comprising:
a first body (100) housing an electromagnetic coil (120), the electromagnetic coil (120) comprising an electrically conductive winding (122) wound around a core (124) of a ferrimagnetic material, the electromagnetic coil (120) being configured to be electrically coupled to a current source for providing the electromagnetic coil (120) with an alternating current (AC), wherein the core (124) of the electromagnetic coil (124) comprises a first end portion (126a) and a second end portion (126b);
a second body (200) comprising a receptacle (210), the receptacle (210) comprising an opening (212) for receiving an elongated ferrimagnetic element (220) and an accommodation space (214) for retaining the elongated ferrimagnetic element (220), wherein the accommodation space (214) is provided with at least one spring (232a, 232 b), the at least one spring (232a, 232b) having an extension in a direction towards the opening;
wherein the second body (200) is configured such that, in an assembled state of the EAF device (10), the second body (200) is connected to the first body (100) such that the opening (212) of the receptacle (210) faces the first body (100); and
wherein the receptacle (210) is configured such that when the EAF device (10) is brought into the assembled state, an elongated ferrimagnetic element (220) which is retained in the receptacle (210) and the core (124) of the electromagnetic coil (120) are pressed against each other whereby the elongated ferrimagnetic element (220) is pressed against the at least one spring (232a), thereby bringing the at least one spring (232a) into a biased state, and wherein, in the assembled state, the elongated ferrimagnetic element (220) is arranged against the first end portion (126a) and the second end portion (126b) of the core (124) of the electromagnetic coil (120) such that the core (124) and the elongated ferrimagnetic element (220) forms a magnetic circuit.

2. The EAF device (10) according to claim 1, wherein the at least one spring (232a, 232b) comprises a first spring (232a) and a second spring (232b), wherein the first spring (232a) and the second spring are configured to abut a respective one of a first portion and a second portion of the elongated ferrimagnetic element (220).

3. The EAF device (10) according to claims 1 or 2, wherein the elongated ferrimagnetic element (220) is a ferrite.

4. The EAF device (10) according to claim 2 or 3, wherein each of the first spring (232a) and the second spring (232b) is provided in the form of a springboard shaped elongated body (234) having a respective first spring end portion (235) fixedly connected to the receptacle (210) and extending from the first spring end portion (235) to a second spring end portion (236), the second spring end portion (236) being moveable with respect to the first spring end portion (235).

5. The EAF device (10) according to claim 4, wherein the springboard shaped elongated body (234) has an arced abutment surface for engaging the elongated ferrimagnetic element (220).

6. The EAF device (10) according to any one of the preceding claims, wherein the accommodation space (214) is defined by a bottom portion (237) and at least one wall portion (238), wherein the first spring (232a) and the second spring (232b) is arranged at the bottom portion (237) or at the at least one wall portion (238).

7. The EAF device (10) according to any one of the preceding claims dependant on claim 2, wherein, in an assembled state of the EAF device (10), the first spring (232a) and the first end portion (126a) of the electromagnetic coil (120) are arranged along a first alignment axis and the second spring (232b) and the second end portion (126b) of the electromagnetic coil (120) are arranged along a second alignment axis.

8. The EAF device according to any one of the preceding claims, wherein the second body (200) comprises a metal housing (290).

9. The EAF device (10) according to claim 7, wherein, in an assembled state of the EAF device (10), the elongated ferrimagnetic element (210) is electrically insulated from the outer metal housing of the second body (200).

10. The EAF device (10) according to any one of the preceding claims, wherein the first body (100) comprises a metal housing (190).

11. The EAF (10) device according to claim 10, wherein the metal housing (191) of the first body (100) comprises a slit-shaped opening (192), the slit-shaped opening (192) being arranged in a portion of an inwards facing surface of the metal housing (190).

12. The EAF (10) device according to any one of the preceding claims, wherein the elongated ferrimagnetic element (220) and/or the electromagnetic coil (120) are at least partially enclosed by a vibration absorbing material.

13. The EAF (10) device according to any one of the preceding claims, wherein the current source is configured to provide the electromagnetic coil (120) with high-frequency AC.

14. The EAF device (10) according to claim 13, wherein the current source is configured to provide the electromagnetic coil (120) with a plurality of AC pulse trains.
